# EUROPEAN PATENT APPLICATION

(11) **EP 4 726 523 A1**
(43) Date of publication of application: **15.04.2026**
(21) Application number: 25169752.0
(22) Date of filing: 10.04.2025
(51) Int. Cl.: G06F 3/06, G06F 12/02

(54) **DATA PROCESSING METHOD, DATA PROCESSING DEVICE AND ELECTRONIC APPARATUS**

(30) Priority: 12.10.2024 CN 202411422840; 24.03.2025 US 202519088048
(71) Applicant: Samsung Electronics Co., Ltd., Suwon-si, Gyeonggi-do 16677 (KR)
(72) Inventor: ZHANG, Yuanyi, XiAn, Shaanxi (CN); ZHANG, Heng, XiAn, Shaanxi (CN); LI, Shicheng, XiAn, Shaanxi (CN); XU, Xin, XiAn, Shaanxi (CN); HUI, Zhe, XiAn, Shaanxi (CN); PARK, Sung-Jun, XiAn, Shaanxi (CN)
(74) Representative: Kuhnen & Wacker Patent- und Rechtsanwaltsbüro PartG mbB

(57) **Abstract**

A data processing method includes generating order-preserving write requests including order-preserving information with respect to data, constructing a queue of the order-preserving write requests, based on the order-preserving write requests, and for each order-preserving write request in the queue, based on the order-preserving information of the order-preserving write request, transmitting both an order-preserving command and the order-preserving write request to a storage apparatus, or transmitting only the order-preserving write request to the storage apparatus.

## Description

### CROSS-REFERENCE TO RELATED APPLICATION

This application is based on and claims priority to Chinese Patent Application No. 202411422840.7 filed with the State Intellectual Property Office of China on October 12, 2024, the contents of which being incorporated by reference herein in its entirety.

### BACKGROUND

The present disclosure generally relates to the field of computer storage and computing technology, and particularly, relates to a data processing method, a data processing device, and an electronic apparatus.

At present, when performing an order-preserving write in a flash-friendly file system (F2FS) file system, it is necessary to wait for a current write command to be executed by a storage apparatus before processing a next write command. A main overhead of a waiting time is a dynamic memory access (DMA) transfer of data, which makes the data transfer process consume a long time.

In addition, when using a Barrier-Enabled IO Stack (BEIOS) operating system, each thread needs to transmit a separate Barrier Write Command (BWC) order-preserving write command when performing the order-preserving write operation. When there are many order-preserving write threads to be executed, a large number of BWC commands will be generated, which occupies an increased amount of queue resources of the storage apparatus, and consumes computing resources of the storage apparatus. As a result, an order-preserving write ability of the storage apparatus decreases.

### SUMMARY

It is an aspect to provide a data processing method, a data processing device, and an electronic apparatus, which may maintain states of order-preserving write threads, reduce overhead caused by transmitting redundant order-preserving write commands, and save queue and computational resources of a storage apparatus, thereby improving performance and efficiency of an order-preserving write in a plurality of threads.

According to an aspect of one or more embodiments, there is provided a data processing method comprising generating a plurality of order-preserving write requests comprising order-preserving information with respect to data; constructing a queue of the plurality of order-preserving write requests, based on the plurality of order-preserving write requests; and for each order-preserving write request in the queue based on the order-preserving information of the order-preserving write request, transmitting both an order-preserving command and the order-preserving write request to a storage apparatus, or transmitting only the order-preserving write request to the storage apparatus.

According to another aspect of one or more embodiments, there is provided a data processing device comprising a memory and a processor configured to implement an order-preserving write request generator configured to generate a plurality of order-preserving write requests comprising order-preserving information, with respect to data; an order-preserving write request queue constructor configured to construct a queue of the plurality of order-preserving write requests based on the plurality of order-preserving write requests; and a transmitter configured to, for each order-preserving write request in the queue, transmit both an order-preserving command and the order-preserving write request to a storage apparatus, or transmit only the order-preserving write request to the storage apparatus based on the order-preserving information of the order-preserving write request.

According to yet another aspect of one or more embodiments, there is provided an electronic apparatus comprising at least one processor; and at least one memory that stores computer executable instructions for implementing the data processing method described above. The at least one processor accesses the at least one memory to execute the computer executable instructions, causing the at least one processor to execute the data processing method.

According to still another aspect of one or more embodiments, there is provided a computer readable storage medium that stores instructions which, when executed by a processor, cause the processor to at least generate a plurality of order-preserving write requests comprising order-preserving information with respect to data; construct a queue of the plurality of order-preserving write requests, based on the plurality of order-preserving write requests; and for each order-preserving write request in the queue based on the order-preserving information of the order-preserving write request, transmit both an order-preserving command and the order-preserving write request to a storage apparatus, or transmit only the order-preserving write request to the storage apparatus.

### BRIEF DESCRIPTION OF THE DRAWINGS

FIG. 1 is a flowchart illustrating a data processing method according to some embodiments.
FIG. 2 is a schematic diagram illustrating a structure of a data processing system according to some embodiments.
FIG. 3 is a schematic diagram illustrating an example of generating an order-preserving write request according to some embodiments.
FIG. 4 is a schematic diagram illustrating an example of generating a queue of order-preserving write requests according to some embodiments.
FIG. 5 is a schematic diagram illustrating a structure of a data processing device according to some embodiments.
FIG. 6 is a schematic diagram illustrating a structure of an electronic apparatus according to some embodiments.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of various embodiments of the present disclosure. For example, the sequences of operations described herein are merely examples, and are not limited to those set forth herein, but may be changed as will be apparent after an understanding of the various embodiments of the present disclosure, with the exception of operations explicitly described as necessarily occurring in a certain order. Also, descriptions of features that are known in the art may be omitted for increased clarity and conciseness.

The features described herein may be embodied in different forms, and are not to be construed as being limited to the examples described herein. Rather, the examples described herein have been provided merely to illustrate some of the many possible ways of implementing the methods, apparatuses, and/or systems described herein that will be apparent after an understanding of the present disclosure.

As used herein, the term "and/or" includes any one and any combination of any two or more of the associated listed items.

Although terms such as "first", "second", and "third" may be used herein to describe various members, components, regions, layers, or sections, these members, components, regions, layers, or sections are not to be limited by these terms. Rather, these terms are only used to distinguish one member, component, region, layer, or section from another member, component, region, layer, or section. Thus, a "first" member, component, region, layer, or section referred to in examples described herein may also be referred to as a "second" member, component, region, layer, or section without departing from the teachings of the examples.

In the description, when an element, such as a layer, region or substrate, is described as being "on", "connected to" or "bonded to" another element, the element may be directly "on" another element, directly "connected to" or "bonded to" another element, or one or more other elements may be present therebetween. However, when an element is described as being "directly on", "directly connected to" or "directly bonded to" another element, there are no other elements therebetween.

The terminology used herein is used for the purpose of describing various examples only and is not intended to limit the disclosure. The singular form is also intended to include the plural form, unless the context clearly indicates otherwise. The terms "include", "comprise", "have" specify the presence of stated features, numbers, operations, members, elements, and/or combinations thereof, but do not preclude the presence or addition of one or more other features, numbers, operations, elements, elements, and/or combinations thereof.

Unless otherwise defined, all terms (comprising technical and scientific terms) used herein have the same meaning as commonly understood by those skilled in the art to which this disclosure belongs after understanding this disclosure. Terms such as those defined in commonly used dictionaries are to be interpreted as having a meaning consistent with their meaning in the context of the relevant field and in the disclosure, and should not be interpreted in an idealized or overly formal sense, unless expressly so defined herein.

Furthermore, in the description of the examples, when it is considered that the detailed description of the well-known related structure or function will give rise to a vague explanation of the disclosure, such detailed description will be omitted for conciseness.

According to various embodiments, a data processing method may include generating a plurality of order-preserving write requests including order-preserving information with respect to data to be written, in response to execution of a preset write function; constructing a queue of the order-preserving write requests based on the plurality of order-preserving write requests; and with respect to each order-preserving write request in the queue of the order-preserving write requests, transmitting an order-preserving command and the order-preserving write request to a storage apparatus or only transmitting the order-preserving write request to the storage apparatus based on the order-preserving information of the order-preserving write request.

In some embodiments, the data to be written includes user data and metadata, and the generating of a plurality of order-preserving write requests including order-preserving information with respect to data to be written may include generating a plurality of first order-preserving write requests including order-preserving information with respect to the user data, wherein the order-preserving information for each first order-preserving write request includes a thread number based on the data to be written and an order-preserving value determined based on a generating sequence of the first preservation write requests; and generating a plurality of second order-preserving write requests including order-preserving information with respect to the metadata, wherein the order-preserving information for each second order-preserving write request includes the thread number based on the data to be written and an order-preserving value determined based on a generating sequence of the second preservation write requests.

In some embodiments, with respect to each first order-preserving write request, the order-preserving value of the first order-preserving write request may be set to a first value in response to the first order-preserving write request being the last generated first order-preserving write request among the plurality of first order-preserving write requests, otherwise the order-preserving value of the first order-preserving write request may be set to a second value; and with respect to each second order-preserving write request, the order-preserving value of the second order-preserving write request may be set to the first value in response to the second order-preserving write request being the last generated second order-preserving write request among the plurality of second order-preserving write requests, otherwise the order-preserving value of the second order-preserving write request may be set to the second value.

In some embodiments, the constructing of a queue of the order-preserving write requests based on the plurality of order-preserving write requests may include performing an order-preserving scheduling processing based on the plurality of order-preserving write requests, to construct the queue of the order-preserving write requests, in response to existence of preset IO scheduling; and constructing the queue of the order-preserving write requests according to the generating sequence of the plurality of order-preserving write requests, in response to absence of the preset IO scheduling.

In some embodiments, the performing of an order-preserving scheduling processing based on the plurality of order-preserving write requests, to construct the queue of the order-preserving write requests, in response to existence of preset IO scheduling, may include inserting the plurality of order-preserving write requests into a First Input First Output queue in the generating sequence, to obtain an initial queue of the order-preserving write requests; constructing a queue of normal write requests by applying the preset IO scheduling to a plurality of normal write requests, wherein the normal write requests are generated based on other data to be written before the preset write function runs; and merging the initial queue of the order-preserving write requests and the queue of normal write requests, to obtain the queue of the order-preserving write requests, according to a write address of each normal write request and a write address of each order-preserving write request.

In some embodiments, the transmitting of an order-preserving command and the order-preserving write request to a storage apparatus or only the transmitting of the order-preserving write request to the storage apparatus based on the order-preserving information of the order-preserving write request may include obtaining the thread number of the order-preserving information of the order-preserving write request, and performing a hash search based on the thread number to obtain state of the thread corresponding to the thread number from a preset hash table; and sequentially transmitting the order-preserving command and the order-preserving write request to the storage apparatus in response to the state of the thread being a first state.

In some embodiments, the transmitting of an order-preserving command and the order-preserving write request to a storage apparatus or only the transmitting of the order-preserving write request to the storage apparatus based on the order-preserving information of the order-preserving write request, may further include setting the state of the thread in the preset hash table to a second state, and setting states of other threads in the preset hash table that meet a preset condition to the second state, after sequentially transmitting the order-preserving command and the order-preserving write request to the storage apparatus, wherein the preset condition indicates that the state of the thread is the first state.

In some embodiments, the transmitting of an order-preserving command and the order-preserving write request to a storage apparatus or only the transmitting of the order-preserving write request to the storage apparatus based on the order-preserving information of the order-preserving write request, may further include setting the state of the thread to the second state, and adding the thread number and the state of the thread to the preset hash table, in response to not obtaining the state of the thread corresponding to the thread number from the preset hash table.

In some embodiments, the transmitting of an order-preserving command and the order-preserving write request to a storage apparatus or only the transmitting of the order-preserving write request to the storage apparatus based on the order-preserving information of the order-preserving write request, may further include determining the order-preserving value in the order-preserving information of the order-preserving write request in response to setting the state of the thread to the second state or the state of the thread obtained from the preset hash table being not the first state; and transmitting the order-preserving write request to the storage apparatus and resetting the state of the thread based on the order-preserving value.

In some embodiments, the resetting of the state of the thread may include setting the state of the thread to a third state in response to the order-preserving value being the second value; and setting the state of the thread to the first state in response to the order-preserving value being the first value.

According to some embodiments, a data processing device may include an order-preserving write request generation unit, configured to generate a plurality of order-preserving write requests including order-preserving information, with respect to data to be written, in response to execution of a preset write function; an order-preserving write request queue construction unit, configured to construct a queue of the order-preserving write requests based on the plurality of order-preserving write requests; and a transmission unit, configured to transmit an order-preserving command and the order-preserving write request to a storage apparatus or only transmit the order-preserving write request to the storage apparatus based on the order-preserving information of the order-preserving write request, with respect to each order-preserving write request in the queue of the order-preserving write requests.

In some embodiments, the data to be written may include user data and metadata, and the order-preserving write request generation unit may be further configured to: generate a plurality of first order-preserving write requests including order-preserving information with respect to the user data, wherein the order-preserving information for each first order-preserving write request includes a thread number based on the data to be written and an order-preserving value determined based on a generating sequence of the first preservation write requests; and generate a plurality of second order-preserving write requests including order-preserving information with respect to the metadata, wherein the order-preserving information for each second order-preserving write request includes the thread number based on the data to be written and an order-preserving value determined based on a generating sequence of the second preservation write requests.

In some embodiments, the order-preserving write request generation unit may be further configured to, with respect to each first order-preserving write request, set the order-preserving value of the first order-preserving write request to a first value in response to the first order-preserving write request being the last generated first order-preserving write request among the plurality of first order-preserving write requests, otherwise set the order-preserving value of the first order-preserving write request to a second value; and with respect to each second order-preserving write request, set the order-preserving value of the second order-preserving write request to the first value in response to the second order-preserving write request being the last generated second order-preserving write request among the plurality of second order-preserving write requests, otherwise set the order-preserving value of the second order-preserving write request to the second value.

In some embodiments, the order-preserving write request queue construction unit may be further configured to perform an order-preserving scheduling processing based on the plurality of order-preserving write requests, to construct the queue of the order-preserving write requests, in response to existence of preset IO scheduling; and construct the queue of the order-preserving write requests according to the generating sequence of the plurality of order-preserving write requests, in response to absence of the preset IO scheduling.

In some embodiments, the order-preserving write request queue construction unit may be further configured to insert the plurality of order-preserving write requests into a First Input First Output queue in the generating sequence, to obtain an initial queue of the order-preserving write requests; construct a queue of normal write requests by applying the preset IO scheduling to a plurality of normal write requests, wherein the normal write requests are generated based on other data to be written before the preset write function runs; and merge the initial queue of the order-preserving write requests and the queue of normal write requests, to obtain the queue of the order-preserving write requests, according to a write address of each normal write request and a write address of each order-preserving write request.

In some embodiments, the transmission unit may be further configured to obtain the thread number of the order-preserving information of the order-preserving write request, and perform a hash search based on the thread number to obtain state of the thread corresponding to the thread number from a preset hash table; and sequentially transmit the order-preserving command and the order-preserving write request to the storage apparatus in response to the state of the thread being a first state.

In some embodiments, the transmission unit may be further configured to set the state of the thread in the preset hash table to a second state, and set states of other threads in the preset hash table that meet a preset condition to the second state, after sequentially transmitting the order-preserving command and the order-preserving write request to the storage apparatus, wherein the preset condition indicates that the state of the thread is the first state.

In some embodiments, the transmission unit may be further configured to set the state of the thread to the second state, and add the thread number and the state of the thread to the preset hash table, in response to not obtaining the state of the thread corresponding to the thread number from the preset hash table.

In some embodiments, the transmission unit may be further configured to determine the order-preserving value in the order-preserving information of the order-preserving write request in response to setting the state of the thread to the second state or the state of the thread obtained from the preset hash table being not the first state; and transmit the order-preserving write request to the storage apparatus and reset the state of the thread based on the order-preserving value.

In some embodiments, the transmission unit may be further configured to set the state of the thread to a third state in response to the order-preserving value being the second value; and set the state of the thread to the first state in response to the order-preserving value being the first value.

According to some embodiments, an electronic apparatus may include at least one processor; and at least one memory storing computer executable instructions, wherein the computer executable instructions, when executed by the at least one processor, causes the at least one processor to execute the data processing method as described above.

According to some embodiments, a computer readable storage medium may store computer program, wherein the computer program, when performed by a processor, implement the data processing method as described above.

The data processing method, the data processing device, and the electronic apparatus according to the present disclosure can ensure an order of data write by calling the preset write function, and can maintain the states of the order-preserving write threads, reduce the overhead caused by transmitting the redundant order-preserving write commands, and save the queue and computational resources of the storage apparatus, thereby improving the performance and efficiency of the order-preserving write in a plurality of threads and maintaining a high throughout.

Various embodiments provide a data processing method, a data processing device, and an electronic apparatus.

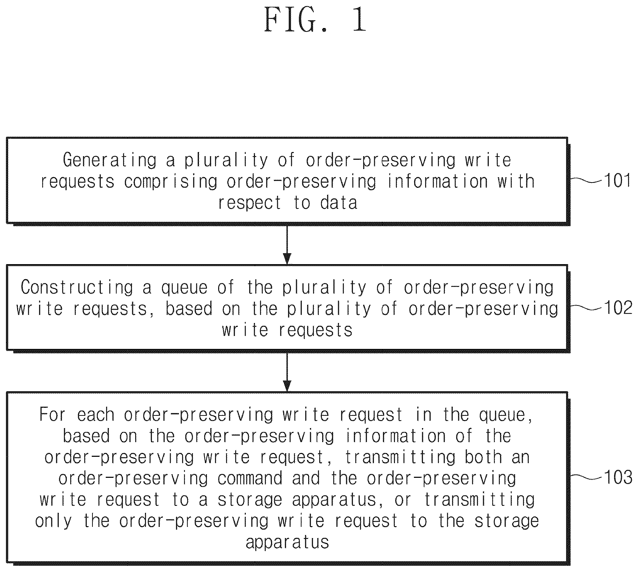

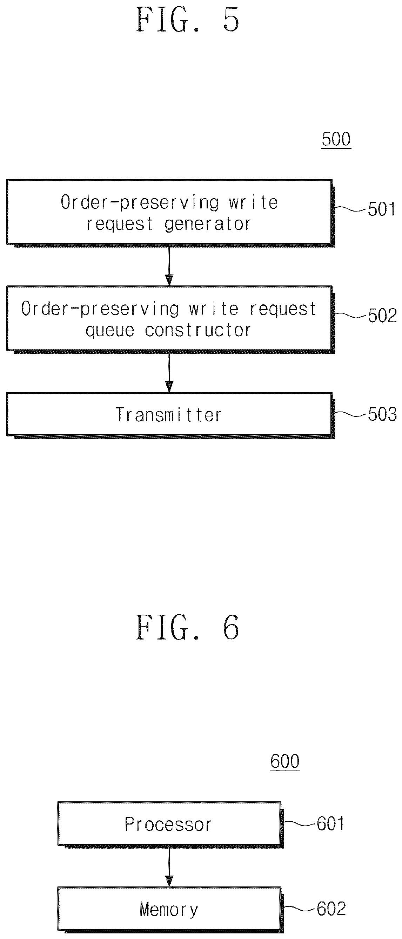

FIG. 1 is a flowchart illustrating a data processing method according to some embodiments. In some embodiments, the data processing method may be executed by the process and memory described below with reference to FIG. 6.

Referring to FIG. 1, in step S101, in response to execution of a preset write function, a plurality of order-preserving write requests including order-preserving information are generated with respect to data to be written. For example, when an application (or a thread) calls the preset write function (i.e., runs or executes the preset write function), the application adds the order-preserving information to the data to be written and generates a corresponding order-preserving write request.

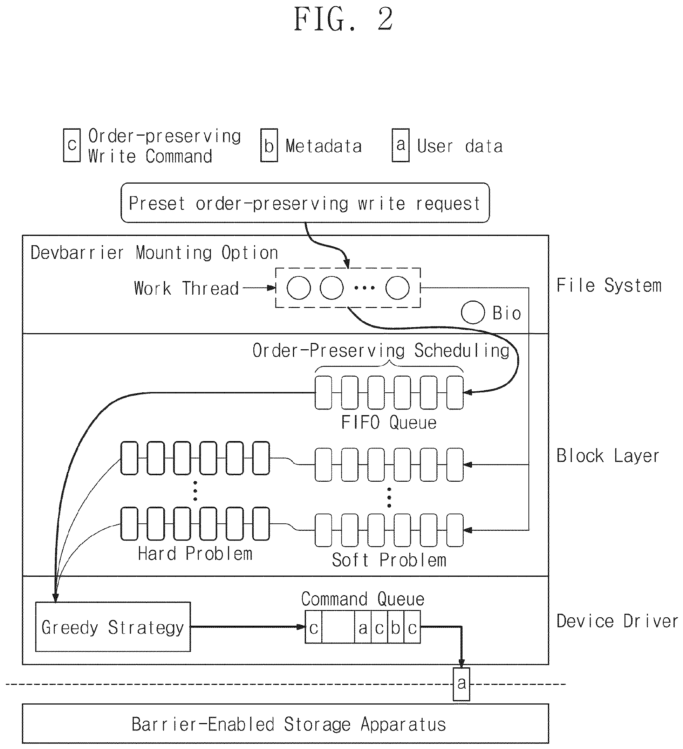

An example of running or executing the preset write function will be described in detail with reference to FIG. 2 below.

FIG. 2 is a schematic diagram illustrating a structure of a data processing system according to some embodiments. Referring to FIG. 2, the data processing system may include a file system, a block layer, and a device driver. In practical applications, the file system may be a Flash-Friendly File System (F2FS) file system, and the preset write function may be lbarrier(). A Devbarrier mounting option may be added to the F2FS file system, which is used to call the lbarrier() function, so as to provide an interface for order-preserving write. When the Devbarrier mounting option is enabled, the lbarrier() function is called to increase the order-preserving information of the data to be written, so as to generate the order-preserving request. In this way, even if an application in the F2FS file system calls fsync() function, the lbarrier() function may still be executed in practice, allowing the application to use the lbarrier() function without modifying source code.

According to some embodiments, the data to be written may include user data and/or metadata. Therefore, in step S101, a plurality of first order-preserving write requests and a plurality of second order-preserving write requests may be generated. In an embodiment, the plurality of first order-preserving write requests may include order-preserving information with respect to the user data, in which the order-preserving information for each first order-preserving write request includes a thread number based on the data to be written and an order-preserving value determined based on a generating sequence of the first preservation write requests. In an embodiment, the plurality of second order-preserving write requests may include order-preserving information with respect to the metadata, in which the order-preserving information for each second order-preserving write request includes the thread number based on the data to be written and an order-preserving value determined based on a generating sequence of the second preservation write requests.

According to some embodiments, with respect to each of the plurality of first order-preserving write requests, in response to the first order-preserving write request being a last generated first order-preserving write request among the plurality of first order-preserving write requests, the order-preserving value of the first order-preserving write request is set to a first value (such as but not limited to 1), otherwise the order-preserving value of the first order-preserving write request is set to a second value (such as but not limited to 0). With respect to each of the plurality of second order-preserving write requests, in response to the second order-preserving write request being the last generated second order-preserving write request among the plurality of second order-preserving write requests, the order-preserving value of the second order-preserving write request is set to the first value, otherwise the order-preserving value of the second order-preserving write request is set to the second value.

As an example, when the application (or the thread) calls the preset write function (i.e., the lbarrier() function), the file system may create the first order-preserving write request with the order-preserving information with respect to the user data, and a number of the first order-preserving write requests may be the same as a number of the user data. At the same time, the file system may create the second order-preserving write request with the order-preserving information with respect to the metadata, and a number of the second order-preserving write requests may be the same as a number of the metadata. Herein, the order-preserving information for the first order-preserving write request and the second order-preserving write request may include the thread number of the thread where the data to be written is located and the order-preserving value corresponding to the generating sequence of the order-preserving write requests.

As described above, the order-preserving value in the corresponding order-preserving information may be determined according to the generating sequence of each first order-preserving write request. Specifically, in an embodiment, the plurality of first order-preserving write requests may be sorted by the generating sequence, the order-preserving value of the last first order-preserving write request may be set to the first value (such as but not limited to 1), and the order-preserving values of the first order-preserving write requests other than the last first order-preserving write request may be set to the second value (such as but not limited to 0). Similarly, in an embodiment, the order-preserving value in the order-preserving information may be determined according to the generating sequence of each second order-preserving write request. That is, the plurality of second order-preserving write requests may be sorted by the generating sequence, the order-preserving value of the last second order-preserving write request may be set to the first value, and the order-preserving values of the remaining second order-preserving write requests may be set to the second value.

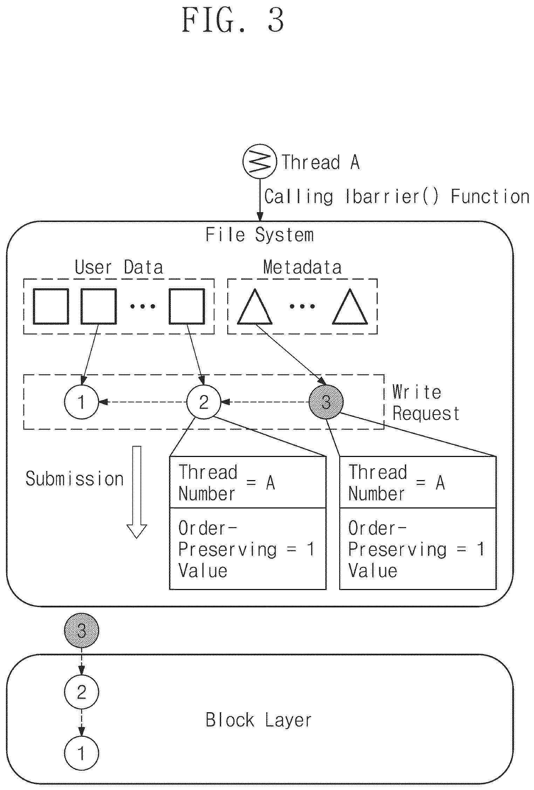

FIG. 3 is a schematic diagram illustrating an example of generating an order-preserving write request according to some embodiments. Referring to FIG. 3, when a thread A (A is a thread number) calls the lbarrier() function, the file system may generate the first order-preserving write requests Circle1 and Circle2 in sequence based on each user data. The order-preserving information of the first order-preserving write request Circle1 includes the thread number A and the order-preserving value 0, and the order-preserving information of the first order-preserving write request Circle2 includes the thread number A and the order-preserving value 1. The file system may generate the second preservation write request Circle3 based on the metadata, and the order-preserving information of the second order-preserving write request Circle3 includes the thread number A and the order-preserving value 1.

Returning to FIG. 1, in step S102, a queue of the order-preserving write requests is constructed based on the plurality of order-preserving write requests.

Referring to FIG. 2 again, a block layer may receive a normal write request directly generated based on the data to be written, as well as the order-preserving write request generated in response to the execution of the preset write function. When the block layer receives the normal write request, the block layer may directly transmit the normal write request to the device driver. When the file system transmits the plurality of generated order-preserving write requests to the block layer, the block layer may construct a queue of the order-preserving write requests based on the received order-preserving write requests.

According to some embodiments, step S102 may include the following steps: in response to existence of preset IO scheduling, performing an order-preserving scheduling processing based on the plurality of order-preserving write requests, to construct the queue of the order-preserving write requests, and in response to absence of the preset IO scheduling, construct the queue of the order-preserving write requests according to the generating sequence of the plurality of order-preserving write requests. In an embodiment, the preset IO scheduling may be implemented by the block layer using an IO scheduler, and the IO scheduler may choose a noop scheduler, a cfq scheduler, a Deadline scheduler and/or an Anticipatory scheduler, but embodiments are not limited thereto. If the block layer does not use the IO scheduler, it indicates that there is no the preset IO scheduling. If the block layer uses the IO scheduler, it indicates that there is the preset IO scheduling.

When the block layer does not use the IO scheduler (i.e., there is no preset IO scheduling), it may be simple to construct the queue of order-preserving write requests based on the generating sequence of the order-preserving write requests.

On the other hand, when the block layer uses the IO scheduler (i.e., there is the preset IO scheduling), the following steps may be executed to perform the order-preserving scheduling processing based on the plurality of order-preserving write requests, to construct the queue of the order-preserving write requests: inserting the plurality of order-preserving write requests into a First Input First Output queue in the generating sequence, to obtain an initial queue of the order-preserving write requests; constructing a queue of normal write requests by applying the preset IO scheduling to a plurality of normal write requests, where the normal write requests are generated based on other data to be written before the preset write function runs; and merging the initial queue of the order-preserving write requests and the queue of normal write requests, to obtain the queue of the order-preserving write requests, according to a write address of each normal write request and a write address of each order-preserving write request.

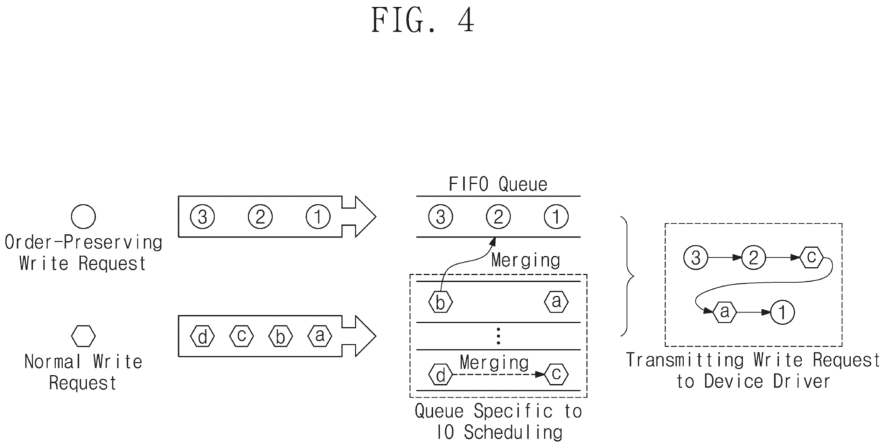

FIG. 4 is a schematic diagram illustrating an example of generating a queue of order-preserving write requests according to some embodiments. Referring to FIG. 4, when there is the preset IO scheduling, the plurality of order-preserving write requests may be sequentially inserted into a First Input First Output queue in the generating sequence, to obtain the initial queue of the order-preserving write requests, as shown in 401 of FIG. 4. Next, the normal write requests may be processed according to the preset IO scheduling, to construct the queue of normal write requests, as shown in 402 of FIG. 4. Then, it is determined whether the write addresses of each order-preserving write request and each normal write request are consecutive, respectively, and at the same time, it is determined whether the write addresses of each normal write request are continuous. Next, the normal write requests with consecutive addresses may be merged first, and then the normal write requests and the order-preserving write requests with consecutive addresses may be merged, thereby obtaining the final queue of order-preserving write requests, as shown in 403 of FIG. 4.

Returning to refer to FIG. 1 again, in step S103, with respect to each order-preserving write request in the queue of the order-preserving write requests, an order-preserving command and the order-preserving write request are transmitted to a storage apparatus or only the order-preserving write request is transmitted to the storage apparatus, based on the order-preserving information of the order-preserving write request. That is, in some embodiments, the order-preserving command and the order-preserving write request are transmitted to the storage apparatus. In some embodiments, only the order-preserving write request is transmitted to the storage apparatus.

Specifically, in an embodiment, for any order-preserving write request, the thread number of the order-preserving information of the order-preserving write request may be obtained first, and a hash search may be performed based on the thread number to obtain the state of the thread corresponding to the thread number from a preset hash table; then, in response to the state of the thread being a first state, the order-preserving command and the order-preserving write request are sequentially transmitted to the storage apparatus.

In an embodiment, as shown in FIG. 2, the queue of order-preserving write requests may be output from the block layer to the device driver, and the device driver may obtain the thread numbers of the order-preserving write requests based on the order-preserving information of the order-preserving write requests in the received queue of order-preserving write requests. Then, the state of the thread corresponding to the thread number may be searched in the hash table according to the thread number. When the searched thread state is a first state, the order-preserving command is transmitted first, and then the order-preserving write request is transmitted. Herein, the thread state being the first state may indicate that the thread state S is P2, in which P2 represents that the order-preserving command is to be transmitted. The order-preserving command may be represented as a Barrier Write Command (BWC) command. By transmitting the BWC command from the device driver to the storage apparatus, the storage apparatus may achieve the order-preserving write based on the BWC command. In an embodiment, the storage apparatus may be a storage apparatus that supports the BWC command.

According to various embodiments, after sequentially transmitting the order-preserving command and the order-preserving write request to the storage apparatus, the state of the thread in the preset hash table may be set to a second state, and states of other threads in the preset hash table that meet a preset condition may also be set to the second state, where the preset condition indicates that the state of the thread is the first state.

As an example, in an embodiment, the thread state being the second state may indicate that the thread state S is P0, wherein P0 represents that the thread is in an initial state. When the order-preserving command and the order-preserving write request are sequentially transmitted to the storage apparatus, the thread state of the thread where the order-preserving command is located is set to the second state, that is, the initial state, and the threads of which the thread state is the first state (i.e., P2) in the hash table are deleted (i.e., the thread state being the first state is also set to the second state). In this way, when there are a plurality of threads performing the order-preserving write, only a current thread is supported to transmit the BWC command, thereby saving queue resources and computing resources of the storage apparatus, and improving the performance of the order-preserving write.

On the other hand, in response to not obtaining the state of the thread corresponding to the thread number from the preset hash table, the state of the thread may be set to the second state, and the thread number and the state of the thread are added to the preset hash table.

In an embodiment, when the state of the thread corresponding to the thread number is not obtained in the preset hash table, the thread state of the thread is set to the second state (i.e., P0, the initial state), and the thread state and thread number of the thread are added to the preset hash table, so that the corresponding thread state may be determined for other order-preserving write requests of the thread.

According to various embodiments, in response to setting the state of the thread to the second state or the state of the thread obtained from the preset hash table being not the first state, the order-preserving value in the order-preserving information of the order-preserving write request may be determined; and based on the order-preserving value, the order-preserving write request is transmitted to the storage apparatus and the state of the thread is reset.

According to various embodiments, the state of the thread may be reset by the following steps: in response to the order-preserving value being the second value, setting the state of the thread to a third state (i.e., P1); and in response to the order-preserving value being the first value, setting the state of the thread to the first state (i.e., P2).

In an embodiment, when the state of the thread is set to the second state, or when the thread state found in the preset hash table according to the thread number is not the first state (i.e., P2) but another state (e.g., the second state P0 or the third state P1), the state of the thread may be reset according to the order-preserving value in the order-preserving information and the order-preserving write request may be transmitted to the storage apparatus. Specifically, in an embodiment, when the thread state is P0 or P1, the order-preserving value of the order-preserving write request is obtained. When the order-preserving value of the first order-preserving write request is the second value (i.e., 0), it is determined that the first order-preserving write request is not the last first order-preserving write request, the first order-preserving write request is transmitted to the storage apparatus, and the state of the thread where the first order-preserving write request is located is reset to the third state (i.e., P1). When the order-preserving value of the first order-preserving write request is the first value (i.e., 1), it is determined that the order-preserving write request is the last first order-preserving write request, the first order-preserving write request is transmitted to the storage apparatus, and the state of the thread where the first order-preserving write request is located is reset to the first state (i.e., P2). For the second order-preserving write request, it may be processed in a similar way to the first order-preserving write request above, thereby transmitting the second order-preserving write request and resetting the state of the thread where the second order-preserving write request is located.

The data processing method according to various embodiments may ensure an order of data write by calling the preset write function, and may maintain the states of the order-preserving write threads, reduce the overhead caused by transmitting the redundant order-preserving write commands, and save the queue and computational resources of the storage apparatus, thereby improving the performance and efficiency of the order-preserving write in a plurality of threads and maintaining a high throughout.

FIG. 5 is a schematic diagram illustrating a structure of a data processing device according to some embodiments.

Referring to FIG. 5, a data processing device 500 may include an order-preserving write request generator 501, an order-preserving write request queue constructor 502, and a transmitter 503. In some embodiments, the order-preserving write request generator 501, the order-preserving write request queue constructor 502, and the transmitter 503 may be implemented by a processor and a memory as described below with respect to FIG. 6.

The order-preserving write request generator 501 generates a plurality of order-preserving write requests including order-preserving information, with respect to data to be written, in response to execution of a preset write function. The order-preserving write request queue constructor 502 constructs a queue of the order-preserving write requests based on the plurality of order-preserving write requests. The transmitter 503 transmits an order-preserving command and the order-preserving write request to a storage apparatus or only transmits the order-preserving write request to the storage apparatus based on the order-preserving information of the order-preserving write request, with respect to each order-preserving write request in the queue of the order-preserving write requests.

According to an embodiment, the data to be written includes user data and metadata. The order-preserving write request generator 501 may generate a plurality of first order-preserving write requests including order-preserving information with respect to the user data, in which the order-preserving information for each first order-preserving write request includes a thread number based on the data to be written and an order-preserving value determined based on a generating sequence of the first preservation write requests; and the order-preserving write request generator 501 may generate a plurality of second order-preserving write requests including order-preserving information with respect to the metadata, in which the order-preserving information for each second order-preserving write request includes the thread number based on the data to be written and an order-preserving value determined based on a generating sequence of the second preservation write requests.

According to an embodiment, with respect to each first order-preserving write request, the order-preserving write request generator 501 may set the order-preserving value of the first order-preserving write request to a first value in response to the first order-preserving write request being the last generated first order-preserving write request among the plurality of first order-preserving write requests, otherwise set the order-preserving value of the first order-preserving write request to a second value; and with respect to each second order-preserving write request, the order-preserving write request generator 501 may set the order-preserving value of the second order-preserving write request to the first value in response to the second order-preserving write request being the last generated second order-preserving write request among the plurality of second order-preserving write request, otherwise set the order-preserving value of the second order-preserving write requests to the second value.

According to an embodiment, the order-preserving write request queue constructor 502 may perform an order-preserving scheduling processing based on the plurality of order-preserving write requests, to construct the queue of the order-preserving write requests, in response to existence of preset IO scheduling; and construct the queue of the order-preserving write requests according to the generating sequence of the plurality of order-preserving write requests, in response to absence of the preset IO scheduling.

According to an embodiment, the order-preserving write request queue constructor 502 may insert the plurality of order-preserving write requests into a First Input First Output queue in the generating sequence, to obtain an initial queue of the order-preserving write requests; construct a queue of normal write requests by applying the preset IO scheduling to a plurality of normal write requests, wherein the normal write requests are generated based on other data to be written before the preset write function runs; and merge the initial queue of the order-preserving write requests and the queue of normal write requests, to obtain the queue of the order-preserving write requests, according to a write address of each normal write request and a write address of each order-preserving write request.

According to an embodiment, the transmitter 503 may obtain the thread number of the order-preserving information of the order-preserving write request, and perform a hash search based on the thread number to obtain state of the thread corresponding to the thread number from a preset hash table; and sequentially transmit the order-preserving command and the order-preserving write request to the storage apparatus in response to the state of the thread being a first state.

According to an embodiment, the transmitter 503 may set the state of the thread in the preset hash table to a second state, and set states of other threads in the preset hash table that meet a preset condition to the second state, after sequentially transmitting the order-preserving command and the order-preserving write request to the storage apparatus, wherein the preset condition indicates that the state of the thread is the first state.

According to an embodiment, the transmitter 503 may set the state of the thread to the second state, and add the thread number and the state of the thread to the preset hash table, in response to not obtaining the state of the thread corresponding to the thread number from the preset hash table.

According to an embodiment, the transmitter 503 may determine the order-preserving value in the order-preserving information of the order-preserving write request in response to setting the state of the thread to the second state or the state of the thread obtained from the preset hash table being not the first state; and transmit the order-preserving write request to the storage apparatus and reset the state of the thread based on the order-preserving value.

According to an embodiment, the transmitter 503 may set the state of the thread to a third state in response to the order-preserving value being the second value; and set the state of the thread to the first state in response to the order-preserving value being the first value.

FIG. 6 is a block diagram of an electronic apparatus according to some embodiments. Referring to FIG. 6, an electronic apparatus 600 includes a processor 601 and memory 602. The memory 602 stores computer executable instructions which, when executed by the processor 601, cause the processor 601 to execute the data processing method described with respect to FIGS. 1-4.

As an example, in some embodiments, the electronic apparatus 600 may be a PC, a tablet device, a personal digital assistant, a smart phone or other devices capable of executing the above instructions. Herein, the electronic apparatus 600 does not have to be a single electronic apparatus. Rather, in some embodiments, the electronic apparatus 600 may be an assembly of any device or circuit capable of executing the above instructions (or instruction set) alone or jointly. In an embodiment, the electronic apparatus 600 may be a part of an integrated control system or system manager, or may be configured as a portable electronic apparatus interconnected with local or remote (e.g., via wireless transmission) by an interface. In an embodiment, the electronic apparatus 600 may include a video display (such as, e.g., a liquid crystal display) and a user interaction interface (such as, e.g., a keyboard, a mouse, a touch input device, etc.). All components of the electronic apparatus 600 may be connected to each other via a bus and/or network.

In an embodiment, the processor 601 may include a central processing unit (CPU), a graphics processing unit (GPU), a programmable logic device, a dedicated processor system, a microcontroller, and/or a microprocessor. By way of example and not limitation, the processor 601 may include an analog processor, a digital processor, a microprocessor, a multicore processor, a processor array, a network processor, etc.

The processor 601 may run instructions or code stored in the memory 601. In an embodiment, the memory 602 may further store data. Instructions and data may further be transmitted and received through the network via a network interface device, wherein the network interface device may adopt any known transmission protocol.

In an embodiment, the memory 602 may be integrated with the processor 601. For example, in an embodiment, the memory 602 may be, for example, an RAM or a flash memory that may be arranged in an integrated circuit microprocessor and the like. In some embodiments, the memory 602 may include independent devices, such as an external disk drive, a storage array, or other storage devices that may be used by a database system. The memory 602 and the processor 601 may be operatively coupled, or may communicate with each other, for example, through an I/O port, a network connection, etc., so that the processor 601 may read files stored in the memory 602.

According to various embodiments, there is provided a computer readable storage medium that stores instructions or code for implementing the data processing method described above with respect to FIGS. 1-4. When the instructions or code in the computer readable storage medium are accessed by the processor and executed by the processor, the executed instructions or code cause the processor to execute the data processing method described above with respect to FIGS. 1-4.

The data processing method described above with respect to FIGS. 1-4 may be written as a computer program and stored on a computer readable storage medium. Examples of the computer readable storage medium include: read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD-Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), a card type memory such as multimedia card, secure digital (SD) card or extreme digital (XD) card, magnetic tapes, floppy disks, magneto-optical data storage devices, optical data storage devices, hard disks, solid-state disks, and/or any other device that is configured to store the instructions or software and any associated data, data files, and/or data structures in a non-transitory manner and providing the instructions or software and any associated data, data files, and data structures to a processor or computer so that the processor or computer may execute the instructions. In some embodiments, the computer program and any associated data, data files, and data structures may be distributed over network-coupled computer systems so that the computer program and any associated data, data files, and/or data structures are stored, accessed, and executed in a distributed fashion by one or more processors or computers.

The data processing method, the data processing device, and the electronic apparatus according to various embodiments generates the order-preserving write requests with the order-preserving information using the preset write function, transmits the order-preserving command and the order-preserving write requests to the storage apparatus according to the order-preserving information, or only transmits the order-preserving write requests to the storage apparatus, thus may ensure an order of data write, and may maintain the states of the order-preserving write threads, reduce the overhead caused by transmitting the redundant order-preserving write commands, and save the queue and computational resources of the storage apparatus, thereby improving the performance and efficiency of the order-preserving write in a plurality of threads and maintaining a high throughout.

The detailed description of various embodiments been described in detail with respect to the drawings. Although a few embodiments have been shown and described, it will be appreciated by those skilled in the art that changes and modifications may be made in these embodiments without departing from the principles and spirit of the present disclosure, the scope of which is defined in the claims and their equivalents, and these changes and modifications should also be included within the scope of the claims of the present disclosure.

## Claims

1. A data processing method comprising:
generating a plurality of order-preserving write requests comprising order-preserving information with respect to data;
constructing a queue of the plurality of order-preserving write requests, based on the plurality of order-preserving write requests; and
for each order-preserving write request in the queue:
based on the order-preserving information of the order-preserving write request, transmitting both an order-preserving command and the order-preserving write request to a storage apparatus, or transmitting only the order-preserving write request to the storage apparatus.

2. The data processing method of claim 1, wherein the data comprises user data and metadata, and
wherein generating the plurality of order-preserving write requests comprises:
generating a plurality of first order-preserving write requests comprising first order-preserving information with respect to the user data, the first order-preserving information for each of the plurality of first order-preserving write request comprising a thread number based on the data and a first order-preserving value determined based on a generating sequence of the plurality of first order-preserving write requests; and
generating a plurality of second order-preserving write requests comprising second order-preserving information with respect to the metadata, the second order-preserving information for each of the plurality of second order-preserving write request comprising the thread number based on the data and a second order-preserving value determined based on a generating sequence of the plurality of second order-preserving write requests.

3. The data processing method of claim 2, wherein:
for each first order-preserving write request, the first order-preserving value is a first value in response to the first order-preserving write request being a last generated first order-preserving write request among the plurality of first order-preserving write requests, and otherwise is a second value; and
for each second order-preserving write request, the second order-preserving value is the first value in response to the second order-preserving write request being a last generated second order-preserving write request among the plurality of second order-preserving write requests, and otherwise is the second value.

4. The data processing method of claim 1, wherein constructing the queue comprises:
in response to an existence of preset IO scheduling, performing order-preserving scheduling processing based on the plurality of order-preserving write requests, to construct the queue of the plurality of order-preserving write requests; and
in response to an absence of the preset IO scheduling, constructing the queue of the plurality of order-preserving write requests according to a generating sequence of the plurality of order-preserving write requests.

5. The data processing method of claim 4, wherein the plurality of order-preserving write requests are generated in response to execution of a preset write function, and
wherein performing the order-preserving scheduling processing comprises:
inserting the plurality of order-preserving write requests into a First Input First Output queue in the generating sequence, to obtain an initial queue of the plurality of order-preserving write requests;
constructing a normal queue of normal write requests by applying the preset IO scheduling to a plurality of normal write requests, the normal write requests being generated based on other data before the preset write function is executed; and
merging the initial queue and the normal queue, to obtain the queue of the plurality of order-preserving write requests, according to a write address of each normal write request and a write address of each order-preserving write request.

6. The data processing method of claim 2, wherein transmitting both the order-preserving command and the order-preserving write request to the storage apparatus or transmitting only the order-preserving write request to the storage apparatus comprises:
for each of the plurality of order-preserving write requests:
obtaining the thread number of the order-preserving information of the order-preserving write request, and performing a hash search based on the thread number to obtain a state of a thread corresponding to the thread number from a preset hash table; and
sequentially transmitting the order-preserving command and the order-preserving write request to the storage apparatus in response to the state of the thread being a first state.

7. The data processing method of claim 6, wherein transmitting both the order-preserving command and the order-preserving write request to the storage apparatus or transmitting only the order-preserving write request to the storage apparatus comprises:
after sequentially transmitting the order-preserving command and the order-preserving write request to the storage apparatus, setting the state of the thread in the preset hash table to a second state, and setting states of other threads in the preset hash table that meet a preset condition to the second state,
wherein the preset condition indicates that the state of the thread is the first state.

8. The data processing method of claim 6, wherein transmitting both the order-preserving command and the order-preserving write request to the storage apparatus or transmitting only the order-preserving write request to the storage apparatus comprises:
in response to not obtaining the state of the thread corresponding to the thread number from the preset hash table, setting the state of the thread to a second state, and adding the thread number and the state of the thread to the preset hash table.

9. The data processing method of claim 6, wherein transmitting both the order-preserving command and the order-preserving write request to the storage apparatus or transmitting only the order-preserving write request to the storage apparatus comprises:
for each order-preserving write request:
determining an order-preserving value in the order-preserving information of the order-preserving write request in response to setting the state of the thread to a second state or the state of the thread obtained from the preset hash table being not the first state; and
transmitting the order-preserving write request to the storage apparatus and resetting the state of the thread based on the order-preserving value.

10. The data processing method of claim 9, wherein the resetting comprises:
setting the state of the thread to a third state in response to the order-preserving value being a second value; and
setting the state of the thread to the first state in response to the order-preserving value being a first value.

11. A data processing device comprising a memory and a processor configured to implement:
an order-preserving write request generator configured to generate a plurality of order-preserving write requests comprising order-preserving information, with respect to data;
an order-preserving write request queue constructor configured to construct a queue of the plurality of order-preserving write requests based on the plurality of order-preserving write requests; and
a transmitter configured to, for each order-preserving write request in the queue, transmit both an order-preserving command and the order-preserving write request to a storage apparatus, or transmit only the order-preserving write request to the storage apparatus based on the order-preserving information of the order-preserving write request.

12. A computer readable storage medium that stores instructions which, when executed by a processor, cause the processor to at least:
generate a plurality of order-preserving write requests comprising order-preserving information with respect to data;
construct a queue of the plurality of order-preserving write requests, based on the plurality of order-preserving write requests; and
for each order-preserving write request in the queue:
based on the order-preserving information of the order-preserving write request, transmit both an order-preserving command and the order-preserving write request to a storage apparatus, or transmit only the order-preserving write request to the storage apparatus.

13. The computer readable storage medium of claim 12, wherein the data comprises user data and metadata, and
wherein generating the plurality of order-preserving write requests comprises:
generating a plurality of first order-preserving write requests comprising first order-preserving information with respect to the user data, the first order-preserving information for each of the plurality of first order-preserving write request comprising a thread number based on the data and a first order-preserving value determined based on a generating sequence of the plurality of first order preserving write requests; and
generating a plurality of second order-preserving write requests comprising second order-preserving information with respect to the metadata, the second order-preserving information for each of the plurality of second order-preserving write request comprising the thread number based on the data and a second order-preserving value determined based on a generating sequence of the plurality of second order preserving write requests.

14. The computer readable storage medium of claim 13, wherein:
for each first order-preserving write request, the first order-preserving value is a first value in response to the first order-preserving write request being a last generated first order-preserving write request among the plurality of first order-preserving write requests, and otherwise is a second value; and
for each second order-preserving write request, the second order-preserving value is the first value in response to the second order-preserving write request being a last generated second order-preserving write request among the plurality of second order-preserving write requests, and otherwise is the second value.

15. The computer readable storage medium of claim 12, wherein constructing the queue comprises:
in response to an existence of preset IO scheduling, performing order-preserving scheduling processing based on the plurality of order-preserving write requests, to construct the queue of the plurality of order-preserving write requests; and
in response to an absence of the preset IO scheduling, constructing the queue of the plurality of order-preserving write requests according to a generating sequence of the plurality of order-preserving write requests.
